# EUROPEAN PATENT APPLICATION

(11) **EP 2 253 906 A1**
(43) Date of publication of application: **24.11.2010**
(21) Application number: 09817490.7
(22) Date of filing: 30.09.2009
(51) Int. Cl.: F25B 43/00, B23K 31/02

(54) **METHOD OF MANUFACTURING MACHINE DEVICE, AND REFRIGERATION CYCLE DEVICE MANUFACTURED BY SAME**

(30) Priority: 02.10.2008 JP 2008257420
(71) Applicant: Panasonic Corporation, Kadoma-shi Osaka 571-8501 (JP)
(72) Inventor: NISHIHARA, Yoshikazu, Chuo-ku, Osaka 540-6207 (JP); SANO, Kiyoshi, Chuo-ku, Osaka 540-6207 (JP); YOSHITSUBAKI, Norifumi, Chuo-ku, Osaka 540-6207 (JP); YASUDA, Toru, Chuo-ku, Osaka 540-6207 (JP)
(74) Representative: Eisenführ, Speiser & Partner
(86) International application number: PCT/JP2009/005032
(87) International publication number: WO 2010/038449

(57) **Abstract**

In making a hollow element such as a muffler, an accumulator or the like constituting a refrigerating cycle machine, a cylindrical member is first cut into a predetermined length, and opposite ends of a cut piece are then processed, thereby making a hollow element having opposite ends of a diameter small than a diameter of the cylindrical member. Each of the opposite ends of the hollow element is joined to a connecting pipe while cooling a body and the opposite ends of the hollow element so that a material strength of the hollow element may not be reduced.

## Description

### Technical Field

The present invention relates to a method of making a machine having a hollow element such as, for example, a muffler, an accumulator or the like.

### Background Art

An air conditioner includes a refrigerating cycle machine, which is explained hereinafter.

A conventional air conditioner generally includes an indoor unit and an outdoor unit connected to each other via refrigerant piping. The outdoor unit includes a compressor, a four-way valve, a pressure-reducing device, and a heat exchanger, while the indoor unit includes a heat exchanger. As refrigerating cycle elements, an accumulator is provided on a refrigerant suction side of the compressor, and a muffler is provided on a refrigerant discharge side of the compressor (see, for example, Patent Literature 1 or 2). List of Citations

### Patent Literatures

PL1: Japanese Laid-Open Patent Publication No. 62-9154 (Fig. 1)
PL2: Japanese Laid-Open Patent Publication No. 9-138026 (Fig. 2)

### Summary of Invention

### Problems to be Solved by Invention

A C1220-H material (phosphorous-deoxidized copper) prescribed in JIS (Japanese Industrial Standards) H 3100 has been hitherto used in many cases for a hollow element such as a muffler, an accumulator or the like. This material has a high tensile strength and is superior in ductility, malleability, drawing or spinning properties, weldability, corrosion resistance, and weather resistance.

By making use of such properties, a hollow element of a desired shape such as a muffler, an accumulator or the like is made by cutting a copper pipe of a C1220-H material into a predetermined length and by subsequently subjecting opposite ends thereof to drawing or spinning (with the use of a die). The hollow element is then brazed to refrigerant piping to define a refrigerating cycle.

However, when the opposite ends of the cut copper pipe are strongly pressed by the die for a change in shape, frictional heat is generated to thereby enlarge a raw material tissue of the C1220-H material (reduction in raw material density) and reduce the tensile strength. In general, the brazing increases the temperature of a portion to be brazed up to about 800°C, and a body of the hollow element comes to have a high temperature, resulting in annealing. Accordingly, there arises a problem that the strength of the material would considerably reduce, and in order to solve this problem, the thickness of the material must be increased to some extent.

Recently, the cost of raw materials of metal component parts rises remarkably, and copper pipes are no exceptions. For this reason and for resources saving, a cutdown of the material, i.e., a reduction in thickness or weight of the hollow element such as a muffler, an accumulator or the like is desired.

The present invention has been developed to overcome the above-described disadvantages.

It is accordingly an objective of the present invention to provide a method of making a machine having a hollow element, which can reduce the thickness of the hollow element to thereby reduce the weight and cost of the machine.

### Means to Solve Problems

In accomplishing the above objective, the present invention is directed to a method of making a machine having a hollow element and is characterized by cutting a cylindrical member into a predetermined length, processing opposite ends of a cut piece to make a hollow element having a body and opposite ends of a diameter smaller than a diameter of the cylindrical member, and joining a connecting pipe to each of the opposite ends of the hollow element while cooling the body and the opposite ends of the hollow element.

One of copper, a copper alloy, aluminum, and an aluminum alloy is used for the cylindrical member, and the connecting pipe is brazed to each of the opposite ends of the hollow element while the body and the opposite ends of the hollow element are being maintained at temperatures at which a tensile strength thereof is maintained to a value greater than a point of inflection.

One of copper and a copper alloy is used for the cylindrical member, and the connecting pipe is brazed to each of the opposite ends of the hollow element while the body and the opposite ends of the hollow element are being maintained at temperatures below about 300°C.

Alternatively, one of aluminum and an aluminum alloy is used for the cylindrical member, and the connecting pipe is brazed to each of the opposite ends of the hollow element while the body and the opposite ends of the hollow element are being maintained at temperatures below about 200°C.

It is preferred that the body and the opposite ends of the hollow element be directly cooled by air or water.

The body and the opposite ends of the hollow element can be cooled by a jig provided with a cooling device that can hold the hollow element and maintain the hollow element within a temperature range in which a tensile strength of the hollow element is maintained to a value greater than a point of inflection in tensile strength.

The hollow element may be one of an accumulator and a strainer both disposed on a refrigerant suction side of a compressor of a refrigerating cycle machine, a muffler and an oil separator both disposed on a refrigerant discharge side of the compressor, and a dryer disposed in refrigerant piping.

The hollow element may be prepared by conducting spinning or press working with respect to the opposite ends of the cut piece.

A refrigerating cycle machine can be made by the method of making the machine having the hollow element referred to above.

### Effects of Invention

According to the present invention, a hollow element is prepared by processing opposite ends of a cylindrical member of a predetermined length, and a connecting pipe is joined to each of the opposite ends of the cylindrical member while cooling a body and the opposite ends of the cylindrical member. Accordingly, it becomes possible to reduce the thickness of the hollow element to thereby reduce a material to be used without lowering the strength of the material, thus resulting in a reduction in weight and cost.

Further, because the hollow element is prepared by conducting spinning, which does not generate much heat, with respect to the opposite ends of the cylindrical member, a reduction in strength of a material of the hollow element can be minimized.

### Brief Description of Drawings

Fig. 1 is a sectional view of a muffler constituting a refrigerating cycle.
Fig. 2 is a graph indicating a tensile strength of phosphorous-deoxidized copper and that of a copper alloy with respect to annealing temperatures.
Fig. 3 is a graph indicating a yield strength and a tensile strength of an aluminum alloy with respect to annealing temperatures.

### Description of Embodiments

Embodiments of the present invention are explained hereinafter with reference to the drawings.

A refrigerating cycle of an air conditioner or the like is constituted by connecting a compressor, a four-way valve, a pressure-reducing device, and a heat exchanger, all mounted in an outdoor unit, to a heat exchanger mounted in an indoor unit via refrigerant piping. An accumulator is provided on a refrigerant suction side of the compressor to separate a gaseous refrigerant and a liquid refrigerant, both flowing on a low-pressure side during operation of the refrigerating cycle, to thereby send only the gaseous refrigerant to the compressor. The accumulator also acts to accumulate the liquid refrigerant that flows in large quantity thereinto when the refrigerating cycle is brought to a stop. A muffler is provided on a refrigerant discharge side of the compressor to dampen pulsation of the refrigerant discharged from the compressor for noise reduction.

A hollow element such as a muffler, an accumulator or the like is made by processing a cylindrical member such as, for example, a copper pipe or a copper alloy pipe. A C1220-H material is a typical example of copper pipes, and a solid solution hardening heat-resisting alloy, a precipitation hardening heat-resisting alloy or the like is used for copper alloy pipes. As described above, the C1220-H material is prescribed in JIS H 3100, and a material having a heat resistance increased by solid solution hardening of Sn or a material having a heat resistance increased by precipitation hardening of Co is known as a copper alloy material.

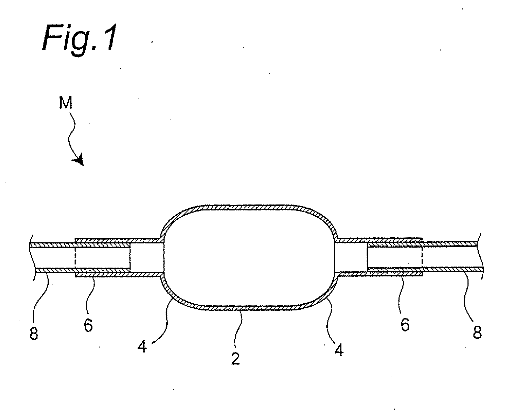

Fig. 1 depicts a muffler M employed as an example of hollow elements mounted to a refrigerating cycle machine. As shown in Fig. 1, the muffler M is formed into a shape having a large-diameter portion (body) 2, two throttled semispherical portions (body) 4 provided on respective sides of the large-diameter portion 2 so as to be continuous thereto, and two small-diameter portions 6 each continuous to one of the two throttled semispherical portions 4 by subjecting a cylindrical member of a predetermined length to drawing, spinning or the like. Each of the small-diameter portions 6 is connected to a connecting pipe 8.

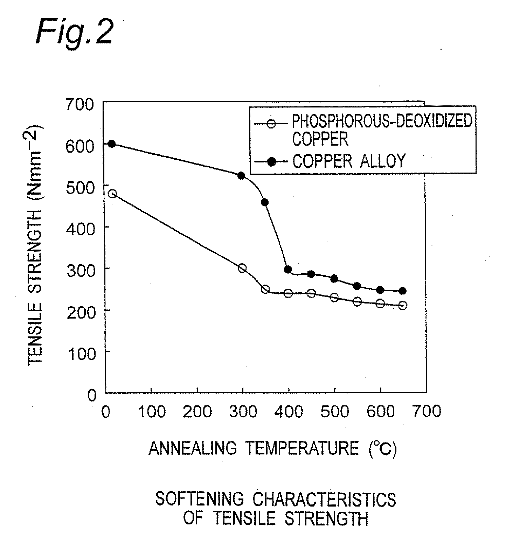

Fig. 2 indicates a tensile strength (softening characteristics) of phosphorous-deoxidized copper containing 0.025 weight % of phosphorus and that of a copper alloy containing 0.029 weight % of phosphorus and 0.67 weight % of tin with respect to annealing temperatures. Tension tests were carried out based on JIS Z 2241.

As shown in the graph of Fig. 2, the tensile strengths of these materials gradually reduce with a temperature increase up to a predetermined annealing temperature (about 300 °C). In a temperature range over the predetermined annealing temperature, the tensile strength of the copper alloy abruptly reduces, while that of the phosphorous-deoxidized copper gradually reduces.

The present invention has been developed taking note of such characteristics, and in connecting each of the small-diameter portions 6 provided at the opposite ends of the muffler M to the connecting pipe 8, the temperature of the muffler M is limited within a temperature range in which the tensile strength of the muffler material does not abruptly reduce.

More specifically, in the practice of the present invention, a copper pipe or a copper alloy pipe having a predetermined thickness is first cut into a predetermined length, and opposite ends of a cut piece are plastically deformed by spinning or press working, which does not generate much heat, thus preparing a muffler M as shown in Fig. 1. Thereafter, a connecting pipe 8 is inserted into each of the small-diameter portions 6 and is then joined thereto by brazing while directly cooling the muffler M (the body 2, 4 and the small-diameter portions 6) using a cooling medium such as air, water or the like, or while cooling the muffler M using a jig provided with a cooling device capable of holding the muffler M and maintaining it within a temperature range in which a tensile strength of the muffler M is kept to a high value greater than a point of inflection in tensile strength.

### Example 1

A muffler M was prepared using a C1220-H material having a diameter of 30mm as a muffler material. When the muffler M was brazed to connecting pipes 8, using the conventional method and the method according to the present invention, results as indicated in Table 1 were obtained. In the case of an article improved by the present invention, when the muffler M was connected to the connecting pipes 8, the temperature of the muffler M was kept below about 300°C by holding and cooling the muffler M to maintain the tensile strength thereof over the point of inflection using the jig provided with the cooling device.

**Table 1**

| | Conventional Article | Particle Improved by Invention |
|---|---|---|
| Material | C1220-H material | C1220-H material |
| Diameter and Thickness | φ 30, t≒0.9 | φ 30, t≒0.65 |
| End Processing Method | Drawing with use of die | Spinning |
| Joining Method | Normal brazing | Brazing while cooling |
| Burst Pressure | 14MPa | 19MPa |

As is clear from Table 1, the conventional article has a lower burst pressure than the article improved by the present invention, though the former is thicker than the latter. That is, in the case of the conventional article, the temperature when each of the small-diameter portions 6 and the connecting pipe 8 are being brazed increases up to a temperature (for example, about 800°C) close to a melting point of a material of the muffler M and that of the connecting pipe 8, and such a high temperature considerably reduces the tensile strength of the material, as clearly shown in the graph of Fig. 2. Accordingly, a predetermined strength (a strength capable of withstanding a pressure three times greater than a maximum internal pressure) is maintained by increasing the thickness of the muffler M.

It is to be noted here that aluminum or an aluminum alloy can be used as the material of the muffler M in place of copper or a copper alloy.

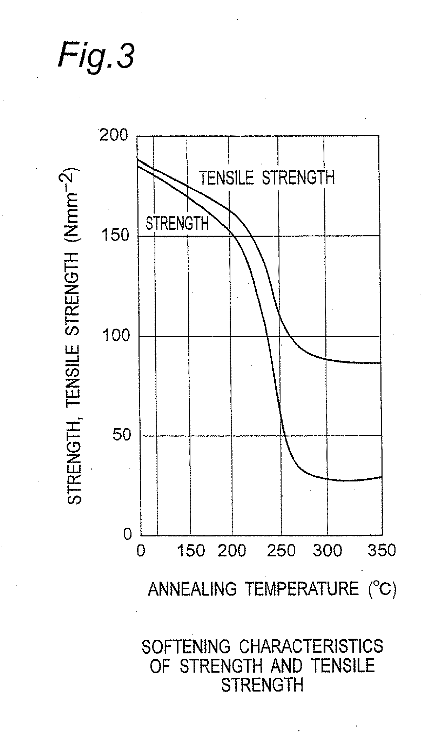

Fig. 3 indicates a strength and a tensile strength (softening characteristics) of an aluminum alloy #1100 (aluminum-based material having an aluminum purity of more than 99%) with respect to annealing temperatures. As indicated in Fig. 3, when the annealing temperature exceeds about 200°C, the strength and the tensile strength of the aluminum alloy abruptly reduces with a temperature increase up to about 270°C, and when the annealing temperature exceeds about 270°C, the strength and the tensile strength gradually reduces.

Accordingly, if an aluminum alloy is used, when the muffler M is connected to the connecting pipes 8, a reduction in strength can be minimized by cooling the muffler M to keep the temperature thereof below about 200°C. However, because the aluminum alloy has a lower strength than copper or copper alloys, the aluminum alloy muffler M must be (for example, about 1.4 times) thicker than copper or copper alloy mufflers.

A brazing filler metal for use in brazing an aluminum alloy melts at a temperature of about 550°C, which is close to a melting temperature of a base material. Accordingly, the cooling of the muffler M during brazing can accomplish the brazing without melting the base material and is, hence, effective in terms of ease of brazing.

Although the refrigerating cycle machine according to the present invention has been described above, taking the case of the muffler or accumulator as a hollow element, the present invention is not limited to the muffler or accumulator and is equally applicable to an oil separator disposed between a compressor and a condenser to separate a refrigerating machine oil from a refrigerant discharged from the compressor, a strainer (filter) disposed in a suction port of the compressor to remove dust, dirt and metal pieces in the refrigerant, a dryer disposed in refrigerant piping to remove moisture in the refrigerant, and the like.

Also, although in the above-describe embodiment the air conditioner has been described as having an outdoor unit and an indoor unit connected to each other via the refrigerant piping, the present invention is not limited thereby and is also applicable to any other refrigerating cycle machines such as an outdoor air conditioner in which the outdoor unit and the indoor unit have been integrated, if they have a hollow element.

### Industrial Applicability

A method of making a refrigerating cycle machine according to the present invention can reduce the thickness of a hollow element constituting a refrigerating cycle to thereby reduce the weight and cost of the refrigerating cycle machine and, hence, this method is effective to make various refrigerating cycle machines including air conditioners.

### List of Reference Numerals

- 2: Large-diameter portion
- 4: Throttled portion
- 6: Small-diameter portion
- 8: Connecting pipe
- M: Muffler

## Claims

1. A method of making a machine having a hollow element, comprising:
cutting a cylindrical member into a predetermined length;
processing opposite ends of a cut piece to make a hollow element having a body and opposite ends of a diameter smaller than a diameter of the cylindrical member; and
joining a connecting pipe to each of the opposite ends of the hollow element while cooling the body and the opposite ends of the hollow element.

2. The method of making the machine having the hollow element according to claim 1, wherein one of copper, a copper alloy, aluminum, and an aluminum alloy is used for the cylindrical member, and the connecting pipe is brazed to each of the opposite ends of the hollow element while the body and the opposite ends of the hollow element are being maintained at temperatures at which a tensile strength thereof is maintained to a value greater than a point of inflection.

3. The method of making the machine having the hollow element according to claim 2, wherein one of copper and a copper alloy is used for the cylindrical member, and the connecting pipe is brazed to each of the opposite ends of the hollow element while the body and the opposite ends of the hollow element are being maintained at temperatures below about 300°C.

4. The method of making the machine having the hollow element according to claim 2, wherein one of aluminum and an aluminum alloy is used for the cylindrical member, and the connecting pipe is brazed to each of the opposite ends of the hollow element while the body and the opposite ends of the hollow element are being maintained at temperatures below about 200°C.

5. The method of making the machine having the hollow element according to any one of claims 1 to 4, wherein the body and the opposite ends of the hollow element are directly cooled by air or water.

6. The method of making the machine having the hollow element according to any one of claims 1 to 4, wherein the body and the opposite ends of the hollow element are cooled by a jig provided with a cooling device that can hold the hollow element and maintain the hollow element within a temperature range in which a tensile strength of the hollow element is maintained to a value greater than a point of inflection in tensile strength.

7. The method of making the machine having the hollow element according to any one of claims 1 to 6, wherein the hollow element comprises one of an accumulator and a strainer both disposed on a refrigerant suction side of a compressor of a refrigerating cycle machine, a muffler and an oil separator both disposed on a refrigerant discharge side of the compressor, and a dryer disposed in refrigerant piping.

8. The method of making the machine having the hollow element according to any one of claims 1 to 7, wherein the hollow element is prepared by conducting spinning or press working with respect to the opposite ends of the cut piece.

9. A refrigerating cycle machine made by the method of making the machine having the hollow element according to any one of claims 1 to 8.
